# EUROPEAN PATENT SPECIFICATION

(11) **EP 3 705 505 B1**
(45) Date of publication and mention of the grant of the patent: **22.05.2024**
(21) Application number: 18872466.0
(22) Date of filing: 31.10.2018
(51) Int. Cl.: C08F 220/06, C08F 220/46, C08F 220/56, C08F 220/14, C08J 9/10, C08J 9/14, C08J 9/00, C08K 5/00, C08K 3/04, C08K 3/22, C08K 3/36

(54) **METHOD FOR PREPARING POLYMETHACRYLIMIDE FOAM USING ONE-STEP-FEEDING GELATION**
VERFAHREN ZUR HERSTELLUNG VON POLYMETHACRYLIMID-SCHAUMSTOFF ANHAND EINER USTROMGELIERUNG IN EINEM SCHRITT
PROCÉDÉ DE PRÉPARATION DE MOUSSE DE POLYMÉTHACRYLIMIDE PAR GÉLIFICATION PAR ALIMENTATION EN UNE PASSE

(30) Priority: 31.10.2017 CN 201711050811
(43) Date of publication of application: 09.09.2020
(73) Proprietor: Cashem Advanced Materials Hi-tech Co., Ltd. Zhejiang, Zhejiang 312369 (CN)
(72) Inventor: XU, Wensheng, Shaoxing Zhejiang 312369 (CN); LI, Kedi, Shaoxing Zhejiang 312369 (CN); FAN, Xiaoqing, Shaoxing Zhejiang 312369 (CN)
(74) Representative: Lavoix
(86) International application number: PCT/CN2018/112995
(87) International publication number: WO 2019/085940

(56) References cited:
- CN-A- 102 675 795
- CN-A- 102 675 796
- CN-A- 103 524 662
- CN-A- 103 524 663
- CN-A- 103 554 355
- CN-A- 106 632 831
- CN-A- 107 629 162
- CN-B- 101 289 565
- US-A1- 2013 041 056

## Description

### FIELD OF THE INVENTION

The present invention relates to the field of foam materials, in particular, to a process for preparing a poly(meth)acrylimide foam by a one-step feeding gelation.

### BACKGROUND OF THE INVENTION

A poly(meth)acrylimide foam is usually obtained by free radical bulk copolymerization of methacrylic acid and methacrylonitrile/acrylonitrile. Because its molecular side chain contains strong polar, large sterically hindered groups, such as imide, carboxyl group and nitrile group, it has the advantages of high specific strength, good heat resistance and corrosion resistance, and is widely used in the fields of aerospace, wind power, new energy vehicles, sports equipment, high-speed railway, ships and medical equipment, etc. The polymerization principle and reaction process of poly(meth)acrylimide foam are shown as follows:

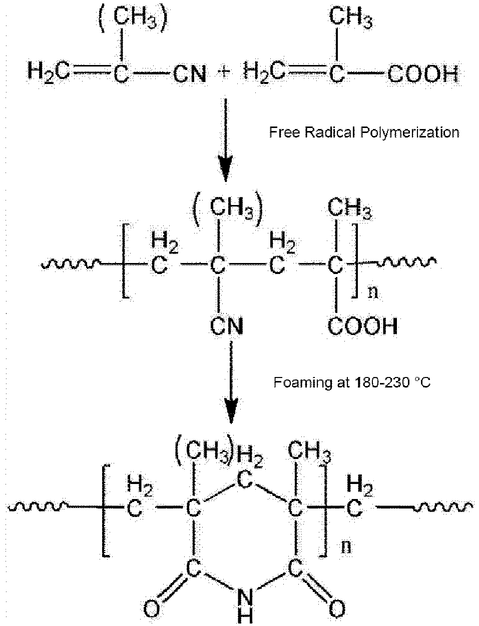

The high strength and high heat resistance of the poly(meth)acrylimide foam are mainly provided by the imide groups in the molecular side chain. It can be seen that, to increase the strength and heat resistance of poly(meth)acrylimide foams, it should generate the structures in which carboxyl (-COOH) is at ortho-position of nitrile (-CN) as many as possible during the polymerization.

There is great differecne in the reactivity ratio of methacrylic acid (MAA) and methacrylonitrile (MAN)/acrylonitrile (AN) (reactivity ratio R_{MAA}: R_{AN}=5.58:0.13, R_{MAA}:R_{MAN}=2.23:0.42). In the actual reaction process, the content of MAA in the initial product of polymerization was higher. With the consumption of MAA, the content of MAN/AN in the late stage of polymerization was higher. Since the (meth)acrylimide polymer is poorly soluble in its monomers, the polymer precipitates out of the polymerization system during the polymerization. The polymer appares uneven up and down due to the presence of sedimentation, and it is difficult to prepare a homogeneous foam plate. Obviously, increasing the uniformity in the reaction process not only helps to prepare a homogeneous foam plate, but also contributes to increase the strength and heat resistance of the product through the improvement of the molecular structure.

In the Chinese invention patent of CN 1215106C, high molecular weight PMMA or PMMI was added to the reaction system, which increases the viscosity of the system and contributes to the uniformity of the system. However, since the molecular polarity of PMMA or PMMI is low and the addition amount thereof is high, the performance of the resulting product is significantly affected.

DE 19606530, CN 103524661A and the like all adopt high-dispersion nano-silica modified polymerization system. Nano-silica is a single thickener. Due to the precipitation of high-molecular polymer during polymerization, nano-silica is difficult to play a sufficient thickening role in the polymerization monomer, and the actual effect is difficult to exert due to the influence of the main formulation system. CN 103554355 discloses a one-step process for the preparation of poly(meth)acrylamide foam. CN 103554355 does not disclose the specific selection of the gelation promoters used in the present invention.

The reactivity ratio as described above, compared with the methacrylic acid/methacrylonitrile system and the methacrylic acid/acrylonitrile system, in the former formulation, the reactivity ratio of methacrylic acid is close to that of methacrylonitrile, and thus there are many methacrylic acids in the ortho-position to methacrylonitrile among the resulting polymers. There are large ratios of carboxyl groups and nitrile groups which are imidated, and thus the obtained polymers have the good thermal and mechanical properties. In the latter formulation, there is a greater difference in the reactivity ratio between methacrylic acid and acrylonitrile, resulting in that there are less methacrylic acid in the ortho-position to acrylonitrile in the resulting polymer chain. The obtained polymer has the segments of methacrylic acid and the segments of acrylonitrile. The ratios of the carboxyl groups and the nitrile groups which are imidated in the side chain are lowered, which is detrimental to the thermal and mechanical properties of the polymer. In general, methacrylic acid is first reacted, and acrylonitrile is redundant with consumption of methacrylic acid. Excess acrylonitrile will be extruded as the reaction progresses, resulting in that the proportions of monomers in different parts of the prepolymerized plate are different, and the structural difference is greater. The distance between methacrylic acid and acrylonitrile is further, and the ratios of the carboxyl groups and the nitrile groups which are converted to imide ring are lower, resulting in the polymer having poorer thermal and mechanical properties. Although the formulation containing methacrylonitrile is much better than the formulation containing acrylonitrile, methacrylonitrile is expensive and has low yield, compared to acrylonitrile. Since acrylonitrile is cheap and has high yield, there is need in the art to modify the formulation containing acrylonitrile, to obtain the polymer having the properties similar to or even better than the polymer obtained from the fomulation containing methacrylonitrile, while increasing the cost performance of the product.

### SUMMARY OF THE INVENTION

The present invention provides a process for preparing a poly(meth)acrylimide foam by a one-step feeding gelation. The functional monomers used in the process are methacrylic acid and acrylonitrile. The process of the invention can be used to prepare a block poly(meth)acrylimide foam, platy poly(meth)acrylimide foam, and functional poly(meth)acrylimide foams with functions such as flame retardance, conductive, and absorbing waves. The obtained poly(meth)acrylimide foams have significantly improved properties such as density, heat distortion temperature, tensile strength and compressive strength. The present invention prepares a uniform and high-performance poly(meth)acrylimides foam by a simple process, which provides a new route for the preparation of PMI foam.

The process for preparing a poly(meth)acrylimide foam by a one-step feeding gelation comprises the following steps:
(1) uniformly mixing a functional monomer, a solubility adjusting monomer, a dispersing aid, an initiator, a crosslinking agent, a nucleating agent, a foaming agent, a functional filler and a gelation promoter (preferably, uniformly mixing a functional monomer, a solubility adjusting monomer, a dispersing aid, an initiator, a crosslinking agent, a nucleating agent, a foaming agent and a functional filler, followed by adding a gelation promoter), dispersing uniformly, and then injecting into a closed planar mold and performing polymerization in a 38-50°C water bath;
(2) reducing the polymerization temperature by 2-10°C when the reaction is performed to form a uniform gel, and then continuously removing the reaction heat to maintain the temperature;
(3) gradiently increasing the temperature to 80-120°C after the gel is completely converted into a solid, to obtain a poly(methyl)acrylimide prepolymerized plate;
(4) foaming the poly(meth)acrylimide prepolymerized plat by heating at 140-230°C, to obtain the poly(meth)acrylimide foam,

wherein the functional monomer is carboxyl group-containing acrylic monomers and nitrile group-containing monomers,
wherein the solubility adjusting monomer is at least one of amide acrylic monomers, ester acrylic monomers, styrene and derivatives thereof,
wherein the gelation promoter is (a) fumed nano titanium dioxide, (b) light magnesium oxide, (c) light zinc oxide, (d) a mixture of hydrophilic fumed nano silica and light magnesium oxide in any ratio or (e) a mixture of fumed nano titanium dioxide and light magnesium oxide in any ratio,
wherein the fumed nano titanium dioxide of the rutile and antase type has a particle size of less than 100 nm; the light magnesium oxide has a specific surface area ≥50 m²/g; the light zinc oxide has a specific surface area of ≥45 m²/g; the hydrophilic fumed nano silica has a specific surface area of 100-400 m²/g.

The functional monomer is carboxyl group-containing acrylic monomers and nitrile group-containing acrylic monomers. Preferably, the raw material components are in parts by weight as follows:
the carboxyl group-containing acrylic monomer: 20-80 parts;
the nitrile group-containing acrylic monomer: 10-90 parts;
the solubility adjusting monomer: 1-30 parts;
the gelation promoter: 0.01-10 parts;
the dispersing aid: 0.05-10 parts;
the initiator: 0.05-15 parts;
the crosslinking agent: 0.1-25 parts;
the nucleating agent: 0.5-25 parts;
the foaming agent: 0.5-25 parts;
the functional filler: 0-30 parts.

The functional monomer includes carboxyl group-containing acrylic monomers and nitrile group-containing acrylic monomers, and the carboxyl group-containing acrylic monomers is selected from the group consisting of methacrylic acid, and a mixture of acrylic acid and methacrylic acid. The nitrile group-containing acrylic monomers is selected from the group consisting of acrylonitrile and a mixture of acrylonitrile and methacrylonitrile.

The above two types of monomers constitute the main monomers for preparing the poly(meth)acrylimide foam.

Preferably, the methacrylic acid is added in an amount of 20-80 parts by weight, the acrylonitrile is added in an amount of 10-90 parts by weight. Further, the methacrylic acid is preferably added in an amount of 30-70 parts by weight, and the acrylonitrile is preferably added in an amount of 30-70 parts by weight.

Still more preferably, it is combined with the following formulation:
the carboxyl group-containing acrylic monomer: 40-60 parts;
the nitrile-containing acrylic monomer: 40-60 parts;
the solubility adjusting monomer: 3-20 parts;
the gelation promoter: 0.01-3 parts;
the dispersing aid: 0.05-1 parts;
the initiator: 0.05-2 parts;
the crosslinking agent: 0.1-1 part;
the nucleating agent: 0.5-3 parts;
the foaming agent: 1-10 parts.

Still more preferably, it is combined with the following formulation:
the carboxyl group-containing acrylic monomer: 45-55 parts;
the nitrile-containing acrylic monomer: 45-55 parts;
the solubility adjusting monomer: 4-15 parts;
the gelation promoter: 0.01-2 parts;
the dispersing aid: 0.05-0.5 parts;
the initiator: 0.1-1 parts;
the crosslinking agent: 0.4-0.8 part;
the nucleating agent: 1.5-3 parts;
the foaming agent: 5-6 parts.

Most preferably, it is combined with the following formulation:
the carboxyl group-containing acrylic monomer: 47 parts;
the nitrile-containing acrylic monomer: 53 parts;
the solubility adjusting monomer: 6-15 parts;
the gelation promoter: 0.01-2 parts;
the dispersing aid: 0.08-0.3 parts;
the initiator: 0.28 parts;
the crosslinking agent: 0.6 parts;
the nucleating agent: 2 parts;
the foaming agent: 6 parts.

In the present invention, in the range of the above-described specific monomer proportions, a solubility adjusting monomer and a gelation promoter are added to obtain a unique gel effect of the present invention. It is found in experiments of the present invention that, at an appropriate ratio, with methacrylic acid and acrylonitrile as the base monomers, optionally adding acrylic acid and methacrylonitrile as comonomers, the solubility of the product at the initial stage of the reaction can be increased when adding a small amount of solubility adjusting monomer and a small amount of gelation promoter, so that the polymer forms a gel with the monomers. The gel locks the unreacted monomers in the gel unit, which can effectively prevent the sedimentation of the polymer and the precipitation of the low reactivity ratio monomers. A uniform poly(meth)acrylimide foam can be obtained, which has the improved strength and heat resistance.

The main principle of the present invention is to lock the comonomers and the resulting polymer particles in the gel unit by promoting the formation of a gel in the polymerization system so as to inhibit the sedimentation of the particles. The obtained polymer exists more uniformly in the different parts of the polymer (it is shown by the difference in upper and lower density in the examples). It also inhibits acrylonitrile having low reaction rate to be extruded, so that the ratio of methacrylic acid to acrylonitrile in the polymer chain can substantially maintain at the monomer ratio. The degree of imidization is much higher, so that the polymer has the higher thermal and mechanical performances (it is shown by the heat distortion temperature, tensile strength and compressive strength in the examples).

Therefore, the selected gelation promoter such as fumed silica and the dispersant play relatively important roles. It is necessary to promote the formation of a gel in the polymerization system through them. In additon, the particle size and dispersion condition of the gelation promoters after dispersion have a great influence on the gel promotion. Their particle size and the matching of dispersant and dispersion process will affect the gel promotion process, which will finally affect the polymer performance and density difference. The inventors have made a large number of screenings on the types of gelation promoters, their amounts and proportions, and found that a uniform poly(meth)acrylimide foam, which has the improved strength and heat resistance, can be obtained, when we select the types of gelation promoters, the amounts and proportions shown in the present invention. When we select othertypes of promoters, amounts, and proportions, it would generally not be satisfactory in terms of uniformity, strength, and heat resistance.

Preferably, in the step (1), the reaction is carried out in a 38-50°C water bath for 2-20 hours to form a uniform gel. More preferably, the reaction is carried out in a 50°C water bath for 8-10 hours.

Preferably, in the step (2), the temperature is continuously maintained for 5-100 hours until the polymerization system is completely converted to a solid. More preferably, the temperature is maintained for 30~40 h after it is lowered by 5-8°C.

Preferably, in the step (3), the procedure of the gradiently raising temperature is as follows: begining from 50°C, raising the temperature once every 15-36 h by 10~25°C each time, and finally maintaining the temperature at 100~120°C for 1~15 hours. More preferably, the temperature is finally maintained at 100°C for 1~15 h. Gradiently raising temperature can further increase monomer conversion ratio and optimize material performance.

The solubility adjusting monomer means a monomer which can participate in the copolymerization, improve the solubility of the initial product in its corresponding monomers, and make the polymer form a sol in the monomers to complete the gelation transformation. The solubility adjusting monomer is at least one of amide acrylic monomers, ester acrylic monomers, styrene, and derivatives thereof.

More preferably, the amide acrylic monomers are acrylamide, methacrylamide, N-methyl acrylamide, N-methyl methacrylamide or a mixture of any of them in any ratio. The ester acrylic monomers are methyl acrylate, ethyl acrylate, n-propyl acrylate, isopropyl acrylate, n-butyl acrylate, isobutyl acrylate, tert-butyl acrylate, methyl methacrylate, ethyl methacrylate, n-propyl methacrylate, isopropyl methacrylate, n-butyl methacrylate, isobutyl methacrylate, t-butyl methacrylate or a mixture of any of them in any ratio.

The gelation promoter is(a) fumed nano titanium dioxide, (b) light magnesium oxide, (c) light zinc oxide, (d) a mixture of hydrophilic fumed nano silica and light magnesium oxide in any ratio or (e) a mixture of fumed nano titanium dioxide and light magnesium oxide in any ratio, wherein the fumed nano titanium dioxide of the rutile and antase type has a particle size of less than 100 nm; the light magnesium oxide has a specific surface area ≥50 m²/g; the light zinc oxide has a specific surface area of ≥45 m²/g; the hydrophilic fumed nano silica has a specific surface area of 100-400 m²/g. Gelation promoters are all commercially available.

The gelation promoter refers to a soluble, slightly soluble or poorly soluble solid filler in a monomer. The filler is dispersed in a monomer to form a uniform colloid or a nanometer-sized small particle. The filler helps to uniformly trasform the polymer sol into a gel and prevent polymer agglomeration, as a heterogeneous nucleating agent of the polymer sol. The gelation promoter is added in a small amount, but plays an important role in the present invention.

The particle size, specific surface area and surface properties of the gelation promoter have a great influence on the gel and should be strictly controlled. Available options of the gelation promoter are: the hydrophilic fumed nano-silica having a specific surface area of 100-400 m²/g, a specific surface area of 280-400 m²/g; fumed nano carbon black having a specific surface area of 200-600 m²/g, preferably a specific surface area of 300-500 m²/g; fumed nano titanium dioxide, rutile type and anatase type, preferably anatase type, having a particle size less than 100 nm; light magnesium oxide having a specific surface area ≥50 m²/g; light zinc oxide having a specific surface area ≥45 m²/g. The above components can be used alone or mixed in any ratio except that the fumed nano carbon black should only be used separately. For fumed nano titanium dioxide and the like, they are difficult to dissolve in the system. In order to promote the dispersion, a dispersing aid can be selectively added by ultrasound, shear emulsification, ball milling, sand milling means.

More preferably, the gelation promoter is selected from the group consisting of fumed silica AEROSIL 200, fumed nano titanium dioxide P2, light zinc oxide or a mixture of fumed silica AEROSIL 380 and active magnesium oxide, preferably a mixture of magnesium oxide and nano titanium dioxide. Preferably, the weight ratio of magnesium oxide to titanium dioxide is from 3:1 to 1:1, preferably 2:1.

The dispersing aid is added to increase the dispersibility of the gelation promoter, and it is helpful to obtain a gel with a smaller amount of the gelation promoter. The dispersing aid includes a phosphate ester, a polyurethane, an organic polyol, an organic polyamine, polyacrylate. Available options of the dispersing aid include: Disperbyk 140/142/170/185/2050/2150, etc., preferably Disperbyk 142, Disperbyk 170, Disperbyk 2050. The addition amount of the dispersing aid is usually 5-100% of the gelation promoter, preferably 35%-80% of the gelation promoter, more preferably 45%-65% of the gelation promoter. Preferably, the combination of the gelation promoter and the dispersing aid is the combination of fumed silica AEROSIL 200 and Disperbyk 2050, the combination of fumed nano titanium dioxide P25 and Disperbyk 142, the combination of light zinc oxide and Disperbyk 142, and the combination of active magnesium oxide and Disperbyk 170. The best poly(meth)acrylimide foam can be obtained through these combinations.

The initiator includes azo initiators such as azobisisobutyronitrile, azobisisoheptanenitrile, 2,2-azobisisobutyronitrile, 2,2-azobis(iso-2,4- Dimethylvaleronitrile); peroxygen initiators such as dibenzoyl peroxide, dilauroyl peroxide, tert-butyl peroctoate, t-butyl peroxypivalate, di-tert-butyl peroxide and a mixture thereof mixed in any ratio. The amount of the initiator can be flexibly adjusted according to the reaction temperature and the amount of the reaction, the heat removal of the reaction system. The amount of the initiator is preferably 0.05-8 parts.

The crosslinking agent includes the compounds containing two or more groups which can participate in the radical copolymerization of the above system, such as allyl acrylate, allyl methacrylate, triallyl isocyanurate, bismaleimide, ethylene glycol dimethacrylate and the like; also includes the (meth)acrylates of alkaline earth metals and zinc which can increase the strength of the polymer through the divalent ionic bonds, such as magnesium acrylate, magnesium methacrylate, zinc acrylate, zinc methacrylate. The (meth)acrylate can be obtained by reacting a corresponding metal oxide with a corresponding carboxylic acid.

The nucleating agent includes carbonamide, formamide, N-methylformamide, N,N-dimethylformamide.

The foaming agent includes formamide, N-methylformamide, N,N-dimethylformamide, isopropanol, n-butanol, tert-butanol, pentanol, isopentanol, n-hexanol, water and a mixture thereof in any ratio.

The functional filler includes a conventional functional filler used for modifying the properties such as flame retardancy or absorbing waves.

The preparation method of the present invention includes the following steps:

### (1) formation of a polymer sol;

The above components other than the gelation promoter are mixed and dissolved uniformly, and a gelation promoter then is added. When the insoluble additive is added, a uniform and stable solution/suspension is formed under stirring or under the aid of ultrasonics, shear emulsification, ball milling, sand milling, etc.. The materials are injected into a closed planar mold to start the polymerization in a water bath at a polymerization temperature of 38-50 °C. After the initiator begins to decompose, it will first undergo an induction period of 1-10 h, after which the polymerization starts, and the polymer is formed, and dissolved in the monomer to form a sol.

### (2) gelation transition of the polymer system;

When the polymer sol concentration exceeds a critical value, a gelation transition occurs under the action of a gelation promoter. The remarkable feature is that the polymerization system becomes turbid; the fluidity is greatly reduced; the thermal conductivity is greatly reduced; macroscopically, the system is in a uniform gel-like shape; microscopically, the polymer chains entangle with each other to form a three-dimensional network, i.e., the structure where the monomer diffusion is limited. At this time, the polymerization temperature is lowered by 2 to 10 °C to ensure that the reaction heat can be continuously removed.

That is, the reaction is carried out at 38-50 °C for 2-20 hours. After the gelation transition of the polymer, the polymerization temperature is lowered by 2-10 °C, and the temperature is kept for 5 to 100 hours until the polymerization system is completely converted into a solid.

### (3) aging of polymer gels;

After the formation of the polymer gel, the monomer continues to polymerize in the gel unit, the gel network is constantly becoming tight, and the gel volume continues to shrink. A gradiently raising the temperature is applied in the step. The temperature is gradiently raised to 80-120°C in 5-100 hours to obtain a poly(methyl)acrylimide prepolymerized plate. The poly(meth)acrylimide prepolymerized plate was heat-foamed at 140-230°C to obtain a poly(meth)acrylimide foam.

The present invention also provides a poly(meth)acrylimide foam prepared as described in the above process.

The poly(meth)acrylimide foam prepared by the invention has significantly improved properties such as the foam density, heat distortion temperature, tensile strength and compressive strength.

Advantages of the present invention: as methacrylonitrile is replaced by acrylonitrile in the formulation and the production process is simple, the material cost is greatly reduced and the market value is high. At the same time, the invention overcomes the problem of unevenness due to the difference in the reactivity ratios of acrylonitrile and methacrylic acid during the copolymerization of acrylonitrile -methacrylic acid. The foams prepared by the method meet the stringent requirements of high performance composite materials forthe foams with high temperature resistant foam core materials.

### DETAILED DESCRIPTION OF THE INVENTION

### Example 1 (reference example)

52 parts by weight of methacrylic acid, 48 parts by weight of acrylonitrile, 5 parts by weight of acrylamide, 1 part by weight of fumed silica AEROSIL 200, 0.1 parts by weight of dispersing aid Disperbyk 2050, 0.5 parts by weight of dibenzoyl peroxide, 0.5 parts by weight of azobisisobutyronitrile, 2 parts by weight of formamide, 5 parts by weight of isopropanol, and 0.6 parts by weight of magnesium methacrylate were mixed.

The above homogeneou100 nms solution was transferred to a flat mold consisting of two flat glass and sealing strips, and the following procedures were carried out under nitrogen protection: 50°C/10 h, 45°C/30 h, 60~90°C/58 h (the temperature was raised once every 15-36 hours, by 10 to 25°C each time) and 100°C/1 h, to obtain a polymethacrylimide prepolymer plate material.

The above prepolymer plate material was foamed at 160°C/1 h, 200°C/2 h to obtain a polymethacrylimide foam plate blank material.

The above polymethacrylimide foam plate blank material was subjected to die-cutting to obtain a polymethacrylimide foam material.

### Example 2

50 parts by weight of methacrylic acid, 50 parts by weight of acrylonitrile, 5 parts by weight of acrylamide, 1 part by weight of fumed nano titanium dioxide P25, 0.2 parts by weight of dispersing aid Disperbyk 142, 0.5 parts by weight of dibenzoyl peroxide, 0.5 parts by weight of azobisisobutyronitrile, 2 parts by weight of formamide, 5 parts by weight of isopropyl alcohol, and 0.6 parts by weight of magnesium methacrylate were mixed.

The above homogeneous solution was transferred to a flat mold consisting of two flat glass and sealing strips, and the following procedures were carried out under nitrogen protection: 50 °C/10 h, 45°C/30h, 60~90°C/58h, 100°C/1h, to obtain a polymethacrylimide prepolymer plate material.

The above prepolymer plate material was foamed at 160°C/1h, 200°C/3h to obtain a polymethacrylimide foam plate blank material.

The above polymethacrylimide foam plate blank material was subjected to die-cutting to obtain a polymethacrylimide foam material.

### Example 3

49 parts by weight of methacrylic acid, 51 parts by weight of acrylonitrile, 5 parts by weight of methacrylonitrile, 2 parts by weight of acrylamide, 0.7 parts by weight of light zinc oxide, 0.1 parts by weight of dispersing aid Disperbyk 142, 0.2 parts by weight of tert-butyl peroxypivalate, 0.15 parts by weight of azobisisobutyronitrile, 0.5 parts by weight of dibenzoyl peroxide, 2 parts by weight of carboxamide, 5 parts by weight of isopropanol, and 0.6 parts by weight of magnesium methacrylate were mixed uniformly.

The above homogeneous solution was transferred to a flat mold consisting of two flat glass and sealing strips, and the following procedures were carried out under nitrogen protection: 50°C/8h, 45°C/35h, 50~90°C/60h, 100°C/1h, to obtain a polymethacrylimide prepolymer plate material.

The above plate material was foamed at 160°C/1h, 205°C/3h to obtain a polymethacrylimide foam plate blank material.

The above polymethacrylimide foam plate blank material was subjected to die-cutting to obtain a polymethacrylimide foam material.

### Example 4

47 parts by weight of methacrylic acid, 53 parts by weight of acrylonitrile, 5 parts by weight of methyl methacrylate, 0.6 parts by weight of fumed silica AEROSIL 380, 1 part by weight of activated magnesium oxide, 0.08 parts by weight of dispersing aid Disperbyk 170, 0.03 parts by weight of tert-butyl peroxypivalate, 0.25 parts by weight of azobisisobutyronitrile, 0.5 parts by weight of dibenzoyl peroxide, 2 parts by weight of formamide, 6 parts by weight of isopropanol, and 0.6 parts by weight of magnesium methacrylate were mixed uniformly.

The above homogeneous solution was transferred to a flat mold consisting of two flat glass and sealing strips, and the following procedures were carried out under nitrogen protection: 50°C/8h, 43°C/40 h, 50~90°C/58 h, 100°C/1h, to obtain a polymethacrylimide prepolymer plate material.

The above plate material was foamed at 160°C/1h, 208°C/3h to obtain a polymethacrylimide foam plate blank material.

The above polymethacrylimide foam plate blank material was subjected to die-cutting to obtain a polymethacrylimide foam material.

### Example 5

This example was the same as Example 1, except that 1 part by weight of fumed silica AEROSIL 200 was replaced with 0.5 part by weight of magnesium oxide/0.5 part by weight of nano-titanium dioxide.

### Example 6

This example was the same as Example 1, except that 1 part by weight of fumed silica AEROSIL 200 was replaced with 0.75 parts by weight of magnesium oxide/0.25 parts by weight of nano-titanium dioxide.

### Comparative Example 1

50 parts by weight of methacrylic acid, 50 parts by weight of acrylonitrile, 0.6 parts by weight of benzoyl peroxide, 0.4 parts by weight of azobisisobutyronitrile, 2 parts by weight of formamide, 5 parts by weight of isopropanol, and 0.6 parts by weight of magnesium methacrylate were mixed uniformly.

The above homogeneous solution was transferred to a flat mold consisting of two flat glass and sealing strips, and the following procedure for polymerization was carried out under nitrogen protection: 50°C/30h, 60~90°C/50h, 100°C/1h, to obtain polymethacrylimide prepolymer plate material.

The above plate material was foamed at 160°C/1h, 200°C/2h to obtain a polymethacrylimide foam plate.

### Comparative Example 2

The present comparative example was the same as Example 1, except that the fumed silica AEROSIL 200 was not used.

### Comparative Example 3

This comparative example was the same as Example 1, except that 48 parts by weight of acrylonitrile was replaced by 61 parts by weight of methacrylonitrile, and fumed silica AEROSIL 200 was not used.

Table 1 below lists the average density, upper and lower density difference, heat distortion temperature, tensile strength, and compressive strength of the foam plates in the examples and comparative examples.

**Table 1**

| | Average density kg/m³ | upper and lower density difference kg/m³ | heat distortion temperature | tensile strength MPa | | Compressive strength MPa | |
|---|---|---|---|---|---|---|---|
| | | | °C | min | max | min | max |
| Example 1 | 58 | 6 | 195 | 1.4 | 1.9 | 1.0 | 1.4 |
| Example 2 | 52 | 5 | 200 | 1.3 | 1.6 | 0.9 | 1.1 |
| Example 3 | 57 | 5 | 205 | 1.5 | 1.9 | 1.0 | 1.3 |
| Example 4 | 67 | 3 | 208 | 1.9 | 2.2 | 1.4 | 1.7 |
| Example 5 | 68 | 3 | 210 | 1.8 | 2.2 | 1.5 | 1.6 |
| Example 6 | 70 | 2 | 213 | 2.1 | 2.4 | 1.6 | 1.9 |
| Comparative Example 1 | 62 | 21 | 186 | 0.6 | 1.5 | 0.3 | 1.4 |
| Comparative Example 2 | 50 | 19 | 185 | 0.5 | 0.8 | 0.3 | 0.5 |
| Comparative Example 3 | 55 | 8 | 190 | 1.1 | 1.5 | 0.8 | 1.1 |

As shown in Table 1 above, based on the comparison of Example 1, Example 5, Example 6 and Comparative Example 2, under the same conditions, when methacrylic acid and acrylonitrile were used in the reaction raw materials, the foam plate obtained by using a gelation promoter had a higher average density, a more uniform density, and a higher heat distortion temperature, compared to the foam plate obtained by not using the gelation promoter. The tensile strength and compressive strength as a whole were superior to those not using the gelation promoter.

Based on the comparison of Example 1/Example 5, Example 6, Comparative Example 2 and Comparative Example 3, under the same conditions, when the same molar amount of acrylonitrile and methacrylonitrile were used without the addition of a gelation promoter, the foam plate obtained by using methacrylonitrile as a reaction raw material had markedly excellent density uniformity, overall tensile strength, and compressive strength as compared with the foam plate obtained by using acrylonitrile as a reaction raw material. When acrylonitrile was used as a reaction raw material in combination with a gelation promoter, the average density, density uniformity, heat distortion temperature, overall tensile strength and compressive strength of the resulting foam plate were greatly improved. The foam plate had substantially equal or even more excellent density uniformity, overall tensile strength, compressive strength and the like, as compared with the foam plate obtained when methacrylonitrile is used as a reaction raw material.

## Claims

1. A process for preparing a poly(meth)acrylimide foam by a one-step feeding gelation, comprising the following steps:
(1) uniformly mixing a functional monomer, a solubility adjusting monomer, a dispersing aid, an initiator, a crosslinking agent, a nucleating agent, a foaming agent and a functional filler, followed by adding a gelation promoter, dispersing uniformly, and then injecting into a closed planar mold and performing polymerization in a 38-50°C water bath;
(2) reducing the polymerization temperature by 2-10°C when the reaction is performed to form a uniform gel, and then continuously removing the reaction heat to maintain the temperature;
(3) gradiently increasing the temperature to 100-120°C after the gel is completely converted into a solid, to obtain a poly(methyl)acrylimide prepolymerized plate;
(4) foaming the poly(meth)acrylimide prepolymerized plat by heating at 140-230°C, to obtain the poly(meth)acrylimide foam,
wherein the functional monomer is carboxyl group-containing acrylic monomers and nitrile group-containing monomers,
wherein the solubility adjusting monomer is at least one of amide acrylic monomers, ester acrylic monomers, styrene and derivatives thereof,
wherein the gelation promoter is (a) fumed nano titanium dioxide, (b) light magnesium oxide, (c) light zinc oxide, (d) a mixture of hydrophilic fumed nano silica and light magnesium oxide in any ratio or (e) a mixture of fumed nano titanium dioxide and light magnesium oxide in any ratio,
wherein the fumed nano titanium dioxide of the rutile and anatase type has a particle size of less than 100 nm; the light magnesium oxide has a specific surface area ≥50 m²/g; the light zinc oxide has a specific surface area of ≥45 m²/g; the hydrophilic fumed nano silica has a specific surface area of 100-400 m²/g.

2. The process according to claim 1, wherein, in the step (1), the reaction is carried out in the 38-50°C water bath for 2-20 hours to form the uniform gel.

3. The process according to claim 1, wherein, in the step (2), the temperature is continuously maintained for 5 to 100 hours until a polymerization system is completely converted into a solid.

4. The process according to claim 1, wherein the amide acrylic monomers are acrylamide, methacrylamide, N-methyl acrylamide, N-methyl methacrylamide or a mixture of any of them in any ratio; the ester acrylic monomers are methyl acrylate, ethyl acrylate, n-propyl acrylate, isopropyl acrylate, n-butyl acrylate, isobutyl acrylate, tert-butyl acrylate, methyl methacrylate, ethyl methacrylate, n-propyl methacrylate, isopropyl methacrylate, n-butyl methacrylate, isobutyl methacrylate, t-butyl methacrylate or a mixture of any of them in any ratio.

5. A poly(meth)acrylimide foam prepared by the process according to any one of claims 1 to 4.

## Patentansprüche

1. Verfahren zur Herstellung eines Poly(meth)acrylimid-Schaums durch eine einstufige Zufuhrgelierung, umfassend die folgenden Schritte:
(1) gleichmäßiges Mischen eines funktionellen Monomers, eines die Löslichkeit einstellenden Monomers, eines Dispergierhilfsmittels, eines Initiators, eines Vernetzungsmittels, eines Keimbildners, eines Schaumbildners und eines funktionellen Füllstoffs, gefolgt von der Zugabe eines Gelierungspromotors, gleichmäßiges Dispergieren und anschließendes Einspritzen in eine geschlossene ebene Form und Durchführen der Polymerisation in einem Wasserbad von 38-50 °C;
(2) Verringerung der Polymerisationstemperatur um 2-10 °C, wenn die Reaktion durchgeführt wird, um ein gleichmäßiges Gel zu bilden, und anschließende kontinuierliche Abführung der Reaktionswärme, um die Temperatur zu halten;
(3) allmähliche Erhöhung der Temperatur auf 100-120 °C, nachdem das Gel vollständig in einen Feststoff umgewandelt ist, um eine vorpolymerisierte Poly(methyl)acrylamidplatte zu erhalten;
(4) Aufschäumen der vorpolymerisierten Poly(meth)acrylimid-Platte durch Erhitzen auf 140-230 °C, um den Poly(meth)acrylimid-Schaum zu erhalten,
wobei das funktionelle Monomer carboxylgruppenhaltige Acrylmonomere und nitrilgruppenhaltige Monomere sind,
wobei das die Löslichkeit einstellende Monomer mindestens eines der folgenden ist: Amid-Acrylmonomere, Ester-Acrylmonomere, Styrol und Derivate davon,
wobei der Gelierungspromotor (a) pyrogenes Nano-Titandioxid, (b) leichtes Magnesiumoxid, (c) leichtes Zinkoxid, (d) eine Mischung aus hydrophilem pyrogenem Nano-Siliziumdioxid und leichtem Magnesiumoxid in einem beliebigen Verhältnis oder (e) eine Mischung aus pyrogenem Nano-Titandioxid und leichtem Magnesiumoxid in einem beliebigen Verhältnis ist,
wobei das pyrogene Nano-Titandioxid des Rutil- und Anatas-Typs eine Teilchengröße von weniger als 100 nm hat; das leichte Magnesiumoxid eine spezifische Oberfläche von ≥50 m²/g hat; das leichte Zinkoxid eine spezifische Oberfläche von ≥45 m²/g hat; das hydrophile pyrogene Nano-Siliziumdioxid eine spezifische Oberfläche von 100-400 m²/g hat.

2. Verfahren nach Anspruch 1, **dadurch gekennzeichnet, dass** in Schritt (1) die Reaktion im Wasserbad bei 38-50 °C für 2-20 Stunden durchgeführt wird, um das einheitliche Gel zu bilden.

3. Verfahren nach Anspruch 1, **dadurch gekennzeichnet, dass** in Schritt (2) die Temperatur kontinuierlich über 5 bis 100 Stunden gehalten wird, bis ein Polymerisationssystem vollständig in einen Feststoff umgewandelt ist.

4. Verfahren nach Anspruch 1, wobei es sich bei den Amid-Acrylmonomeren um Acrylamid, Methacrylamid, N-Methylacrylamid, N-Methylmethacrylamid oder eine Mischung aus diesen in beliebigem Verhältnis handelt; die Esteracrylmonomere sind Methylacrylat, Ethylacrylat, n-Propylacrylat, Isopropylacrylat, n-Butylacrylat, Isobutylacrylat, tert-Butylacrylat, Methylmethacrylat, Ethylmethacrylat, n-Propylmethacrylat, Isopropylmethacrylat, n-Butylmethacrylat, Isobutylmethacrylat, tert-Butylmethacrylat oder eine Mischung davon in beliebigem Verhältnis.

5. Poly(meth)acrylimidschaum, hergestellt nach dem Verfahren gemäß einem der Ansprüche 1 bis 4.

## Revendications

1. Procédé de préparation d'une mousse de poly(méth)acrylimide par gélification par alimentation en une passe, comprenant les étapes suivantes :
(1) mélange uniforme d'un monomère fonctionnel, d'un monomère d'ajustement de la solubilité, d'un agent dispersant, d'un initiateur, d'un agent de réticulation, d'un agent de nucléation, d'un agent moussant et d'une charge fonctionnelle, suivi de l'ajout d'un promoteur de gélification, dispersion uniforme, puis injection dans un moule plan fermé et polymérisation dans un bain d'eau à 38 à 50 °C ;
(2) réduction de la température de polymérisation de 2 à 10 °C lorsque la réaction est effectuée pour former un gel uniforme, puis dégagement continuel de la chaleur de réaction pour maintenir la température ;
(3) augmentation progressive de la température jusqu'à 100 à 120 °C après la transformation complète du gel en solide, afin d'obtenir une plaque prépolymérisée de poly(méthyl)acrylamide ;
(4) moussage du plat prépolymérisé de poly(méth)acrylimide en le chauffant à 140 à 230°C, pour obtenir la mousse de poly(méth)acrylimide,
dans lequel le monomère fonctionnel est constitué de monomères acryliques contenant un groupe carboxyle et de monomères contenant un groupe nitrile,
dans lequel le monomère d'ajustement de la solubilité est au moins l'un des monomères acryliques d'amides, des monomères acryliques d'esters, du styrène et des dérivés de ceux-ci,
dans lequel le promoteur de gélification est (a) du nano-dioxyde de titane pyrogéné, (b) de l'oxyde de magnésium léger, (c) de l'oxyde de zinc léger, (d) un mélange de nano-silice pyrogénée hydrophile et d'oxyde de magnésium léger dans un quelconque rapport ou (e) un mélange de nano-dioxyde de titane pyrogéné et d'oxyde de magnésium léger dans un quelconque rapport,
dans lequel le nano-dioxyde de titane pyrogéné de type rutile et anatase a une taille de particule inférieure à 100 nm ; l'oxyde de magnésium léger a une surface spécifique ≥50 m²/g ; l'oxyde de zinc léger a une surface spécifique ≥45 m²/g ; la nano-silice pyrogénée hydrophile a une surface spécifique de 100 à 400 m²/g.

2. Procédé selon la revendication 1, dans lequel, à l'étape (1), la réaction est effectuée dans un bain d'eau à 38 à 50 °C pendant 2 à 20 heures pour former le gel uniforme.

3. Procédé selon la revendication 1, dans lequel, à l'étape (2), la température est maintenue en continu pendant 5 à 100 heures jusqu'à ce que le système de polymérisation soit complètement transformé en solide.

4. Procédé selon la revendication 1, dans lequel les monomères acryliques d'amides sont l'acrylamide, le méthacrylamide, le N-méthyl acrylamide, le N-méthyl méthacrylamide ou un quelconque mélange de ceux-ci dans un quelconque rapport ; les monomères acryliques d'esters sont l'acrylate de méthyle, l'acrylate d'éthyle, l'acrylate de n-propyle, l'acrylate d'isopropyle, l'acrylate de n-butyle, l'acrylate d'isobutyle, l'acrylate de tert-butyle, le méthacrylate de méthyle, le méthacrylate d'éthyle, le méthacrylate de n-propyle, le méthacrylate d'isopropyle, le méthacrylate de n-butyle, le méthacrylate d'isobutyle, le méthacrylate de t-butyle ou un quelconque mélange de ceux-ci dans un quelconque rapport.

5. Mousse de poly(méth)acrylimide préparée par le procédé selon l'une quelconque des revendications 1 à 4.
